# EUROPEAN PATENT SPECIFICATION

(11) **EP 2 217 428 B1**
(45) Date of publication and mention of the grant of the patent: **06.12.2017**
(21) Application number: 08845938.3
(22) Date of filing: 29.10.2008
(51) Int. Cl.: B29C 65/18, B65B 25/00, B65B 51/14, B65B 7/16, B65B 7/28

(54) **PACKAGING SEAL PLATE HAVING A SHAPED FACE**
VERPACKUNGSVERSIEGELUNGSPLATTE MIT EINER GEFORMTEN FLÄCHE
PLAQUE DE SCELLAGE D'EMBALLAGE AYANT UNE FACE MISE EN FORME

(30) Priority: 31.10.2007 US 984119 P
(43) Date of publication of application: 18.08.2010
(73) Proprietor: Novartis AG, 4056 Basel (CH)
(72) Inventor: CARR, Stephen, N., Stansbury Utah 84074 (US); FOLEY, James, Shay, Snellville Georgia 30039 (US); GROTHE, Kent, M., Buford Georgia 30518 (US); SCHMIEDER, Roland, 61381 Friedrichsdorf (DE); WALTON, IV, Charles, Henry, Cumming Georgia 30040 (US)
(74) Representative: Bohest AG
(86) International application number: PCT/US2008/081535
(87) International publication number: WO 2009/058825

(56) References cited:
- EP-A- 0 033 824
- EP-A- 1 340 678
- CH-A5- 652 965
- FR-A- 2 481 641
- GB-A- 2 433 913
- JP-A- S5 766 923
- JP-A- 2002 321 284
- JP-A- 2006 044 704
- US-A- 3 679 509
- US-A- 4 589 568
- US-A- 4 969 965
- US-A- 6 091 054

## Description

### Technical Field

The present invention relates generally to the packaging of ophthalmic lenses, and more particularly to seal plates used to cover and seal blister packages during the lens packaging process. The invention also relates to seal plates used to package other goods.

### Background of the Invention

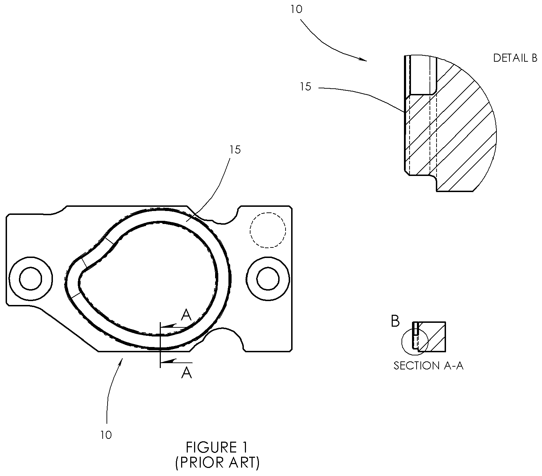

Ophthalmic lenses, such as contact lenses, are often packaged in individual packages, typically known as "blister packages." A blister pack generally consists of a plastic shell defining a concave bowl adapted to house a sterile aqueous solution and at least one lens, and a laminate foil used to cover the plastic bowl and contain the solution and lens therein. Such packaging keeps the lens in a hydrated state before being opened and worn by a user. Often, a lens is contained within a blister package for a significant amount of time while the lens is being shipped and held in storage before use. Therefore, it is important that the aqueous solution be hermetically sealed therein, to ensure that the solution cannot leak out and to prevent contaminants from entering the lens containment area. One method of hermetically sealing the laminate foil to the plastic shell utilizes a heating element, or heated seal plate, to create a heat seal between the foil and the area surrounding the plastic bowl. Heated seal plates presently known and used typically include a flat face that corresponds to the area of the shell surrounding the bowl, such that a heat seal is induced where the flat plate engages and applies pressure and heat against the laminate foil/plastic shell. A known seal plate **10** can be seen in **Figure 1****,** having a flat-face **15** for engaging the laminate foil.

Unfortunately, under certain conditions a hermetic seal is not formed between the foil cover and plastic shell, which can permit the aqueous solution to leak out of the blister package or contaminants to infiltrate the lens area. For example, droplets or moisture between the cover and seal area can create wrinkles in the foil and/or prevent the foil from properly adhering to the plastic shell. These conditions can create small channels or pathways between the foil and bowl, through which the aqueous solution may escape the blister package.

JP 2006 044704 A discloses a method of sealing a packaging bag made of two plastic foils with the aid of a first heat sealing member having a structured surface and a second heat sealing member having a flat surface. The heat sealing is performed such that after heat sealing of the foils there is still channels left for communication between the interior of the package and the exterior of the package so that after filling of the bag there are additional sealing steps necessary (which are no heat-sealing steps) to hermetically seal the plastic bag made of the two foils.

JP S57 66923 also discloses a sealing method in which two heat sealers each having an undulated sealing surface are used to seal two foils. However, the undulated sealing surfaces do not exactly correspond to each other, so that he heat sealer is not suitable to seal a foil to a rigid plastic container.

EP 0 855 264 A1 discloses a seal plate for heat sealing a foil to an ophthalmic lens blister package, said seal plate comprising a heated plate body and a sealing face protruding from the plate body, with the sealing face being a flat (even) face.

JP 2002321284 discloses a method for sealing containers for food or beverages by pressing a sealing head having a convex annular projection into the flange of the container in order to seal the lid to the flange of the container along a linear sealing portion generated in the flange of the container with the aid of the convex annular projection of the sealing head. The portions radially inwardly and radially outwardly of the linear sealing portion serve the purpose of preventing the material of the lid from curling up rather than for providing a hermetic seal.

Accordingly, needs exist for improvements to ophthalmic lens packaging systems that prevent poor seals from developing between the cover and plastic shell of a blister package. It is to the provision of these needs and others that the invention of present invention is directed.

### Summary of the Invention

The present invention relates generally to a seal plate for use in sealing ophthalmic lens blister packages having a laminate foil cover and a plastic shell defining a bowl for containing an ophthalmic lens and lens solution therein, as it is specified by the features of independent claim 1. The irregular shape of the sealing face which includes a plurality of recesses in the sealing face permits the seal plate of the present invention to displace or "squeeze" any moisture that may be present between the foil cover and shell during the sealing process

In various embodiments, the shape of the irregular face can take a variety of forms, including a grid or mesh-like pattern of raised and/or lowered channels, or recesses bored into the face.

These and other forms, features and advantages of the invention will be understood with reference to the drawing figures and detailed description herein, and will be realized by means of the various elements and combinations particularly pointed out in the appended claims. It is to be understood that both the foregoing general description and the following brief description of the drawings and detailed description of the invention are exemplary and explanatory of preferred embodiments of the invention, and are not restrictive of the invention, as claimed.

### Brief Description of the Drawings

**FIGURE 1** shows a known seal plate configuration used to seal ophthalmic blister packages
**FIGURES 2** **and** **3** show a seal plate according to a first example embodiment (not forming part of the claimed invention)
**FIGURE 4** shows a seal plate according to a second example embodiment (not forming part of the claimed invention)
**FIGURE 5** shows a seal plate according to a third example embodiment (not forming part of the claimed invention).
**FIGURE 6** shows a seal plate according to a fourth example embodiment, this embodiment being in accordance with the claimed invention
**FIGURE 7** shows a seal plate according to a fifth example embodiment, this embodiment again being in accordance with the claimed invention
**FIGURES 8-9** show seal plates according to additional example embodiments (not forming part of the claimed invention)
**FIGURES 10-11** show seal plates according to still other example embodiments (not forming part of the claimed) invention.

### Detailed Description of Example Embodiments

The present invention may be understood more readily by reference to the following detailed description of the invention taken in connection with the accompanying drawing figures, which form a part of this disclosure. It is to be understood that this invention is not limited to the specific devices, methods, conditions or parameters described and/or shown herein, and that the terminology used herein is for the purpose of describing particular embodiments by way of example only and is not intended to be limiting of the claimed invention. Also, as used in the specification including the appended claims, the singular forms "a," "an," and "the" include the plural, and reference to a particular numerical value includes at least that particular value, unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about," it will be understood that the particular value forms another embodiment.

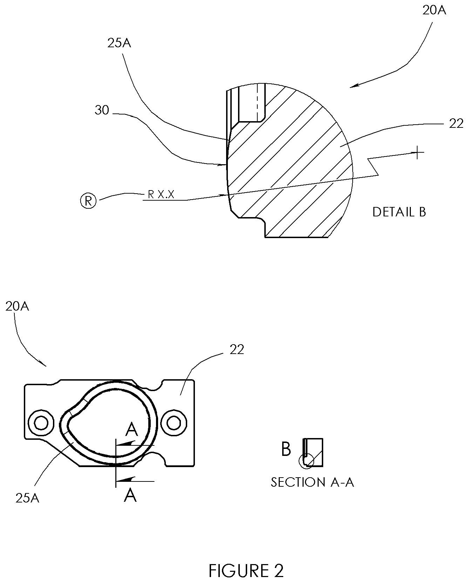

With reference now to the drawing figures, **Figures 2-11** depict lens packaging seal plates **20** according to example embodiments of a number of variations, with the embodiments of Figs. 2-5, 8-10 and 11 not being in accordance with the claimed invention. The seal plates **20** generally include a plate body **22** and a shaped or irregular sealing face **25** for engaging and applying pressure against a lens blister package to form a heat seal between a laminate foil cover and plastic bowl body. The seal plates **20** can be formed/tooled from metals including: steel, steel alloys, iron, aluminum, tin, copper, or other materials.

It has been found that by utilizing a seal plate **20** having a shaped or irregular face **25,** moisture that is present between the cover and plastic bowl can be displaced away from the seal area to improve contact and sealing between the cover and bowl. Direct contact between the cover and bowl facilitates a proper hermetic heat seal between the same. As previously mentioned, known seal plates **10,** such as shown in **Figure 1****,** utilize a flat face **15** to apply heat and pressure to the laminate foil covers of the blister packages, wherein the heat and pressure from the seal face create a heat seal between the cover and plastic bowl. However, known seal plates **10,** because of their flat-faced design, are not able to displace the moisture (e.g. saline solution) that occasionally splashes onto the seal area between the foil cover and plastic shell when the lens and solution is loaded into the package. This moisture can prevent a proper heat seal from developing between the cover and shell.

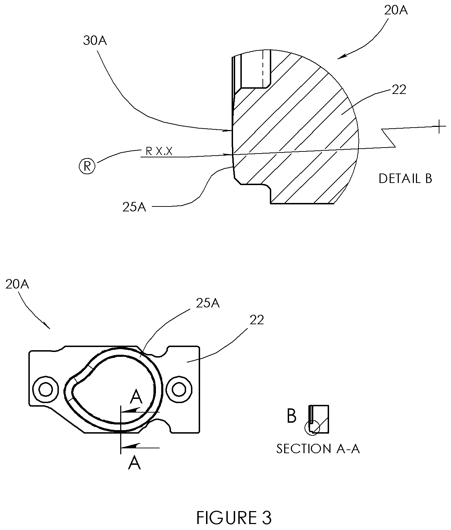

In the embodiment shown in **Figures 2** **and** **3****,** the seal plate **20A** includes a face **25A** having a cross-sectional profile incorporating a radius **R** to provide a moisture-displacing surface. In such embodiments, the radius **R** gives the face a curved profile. The radius **R** can vary as desired by a user, wherein the curvature of the face **25A** increases as the radius decreases. For example, **Figure 3** shows a seal face having a lesser degree of curvature, whereas **Figure 2** shows a greater degree of seal face curvature. During lens packaging, the face **25A** of the seal plate **10** is pressed against the laminate foil cover, which is in turn pressed against the plastic shell, and the apex **30** of the radius **R** becomes the first surface of the face to make contact with the foil cover. As the apex **30** makes contact with the foil cover, pressure is created between the face **25A** and the foil cover against the shell along this initial line of contact. Any moisture, saline, or other aqueous solution that exists between the foil cover and shell is displaced away from the apex **30** and a heat seal is induced at this initial point of contact. As the heat seal process continues, additional pressure may be applied by the seal plate **20A** to the foil cover and shell such that a greater surface area of the face **25A** contacts the cover. Because of the radius **R** of the face **25A,** any droplets of saline or other moisture present between the foil and shell is constantly displaced or "squeegied" away from seal area as pressure is applied. The heat seal area between the foil cover and shell increases as greater pressure is applied and more of the surface of the plate face **25A** comes into contact with the foil cover against the shell. When the desired extent of heat seal has been formed between the foil cover and shell, the user can remove the face **25** from the sealed blister package.

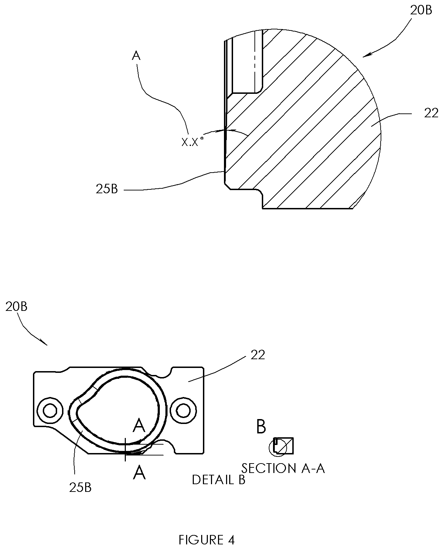

With reference now to **Figure 4****,** a seal plate **20B** according to another example embodiment is depicted. The seal plate **20B** includes a sloped face **25B** inclined at a reference angle **A,** as seen in **Figure 4****.** Angle **A** can better be defined as the angle of inclination of the contact face **25B** of seal plate **20B** and a reference plane intersecting the rim of the contact face about its periphery. Angle **A** can vary from about 0.5 degrees to about 10 degrees, for example about 1.5 degrees as depicted. The inclination can be inward or outward. The sloped face **25B** of the present embodiment incrementally contacts the laminate foil cover/plastic shell as greater pressure is applied by the heated plate **20B** between the foil cover and shell. As a greater surface area of the face **25B** contacts and applies pressure against the foil cover/shell, any moisture that is present between the foil cover and shell is displaced or "squeegied" away from seal area, such that a proper hermetic heat seal is induced.

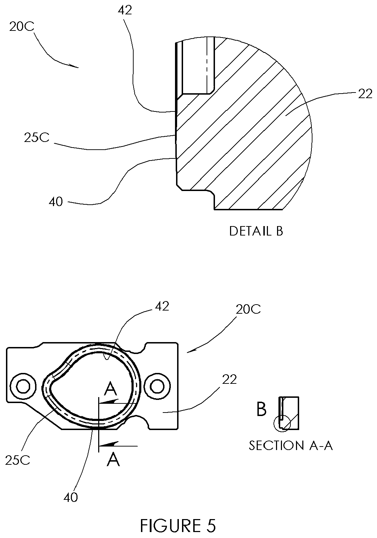

Another example embodiment of a seal plate **20C** is shown in **Figure 5****.** The seal plate **20C** includes a tiered face **25C** having an upper tier **40** and lower tier **42**. In commercial embodiments, each tier **40,42** occupies about one-half of the face's **25** surface area, although in other example embodiments, this percentage can vary. Provision of two or more tiered surfaces **40,42** provides a channel or outlet for any moisture to escape to when the face **25C** is pressed against the laminate foil/plastic shell during the packaging process. For example, when the face **25C** first contacts the laminate foil, only the upper tier **40** is pressed against the foil and a gap exists between the lower tier **42** and the foil. Any moisture that is present between the foil and bowl will be squeezed beyond the seal area or into this gap, ensuring that a heat seal is induced between the foil cover and bowl. As the face **25C** is further pressed against the foil/bowl, any moisture that may have collected within the gap can be squeezed beyond the seal area. Even if all of the moisture is not squeezed out of this gap, a sufficient heat seal will have been induced between the foil cover and bowl along the area first contacted by the upper tier **40** of the face **25C.** In alternative embodiments, the face **25C** can include three or more stepped tiers.

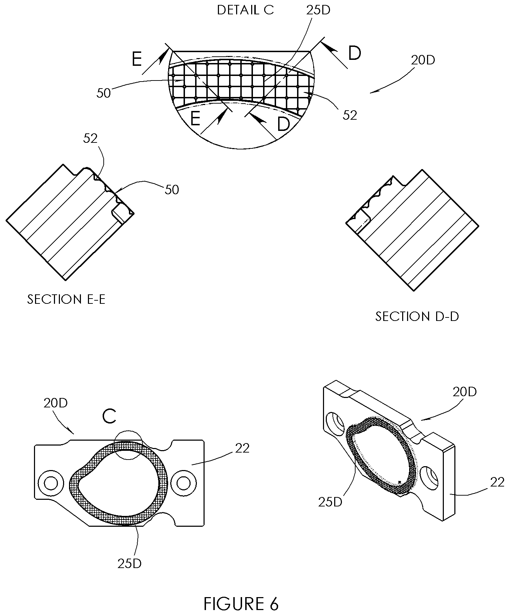

**Figure 6** depicts a seal plate **20D** according to an example embodiment of the present invention. In this embodiment, the seal plate **20D** includes a mesh or grid-like sealing face **25D.** The grid-like face **25D** comprises raised grid lines **50** in a cross-hatched pattern that define recessed channels or cavities **52** therebetween. The number of recesses **52** and grid lines **50** can vary. As the seal plate **20D** is pressed against the laminate foil cover a heat seal is induced along the grid lines **50** and any moisture present between the cover and plastic bowl is displaced into pockets formed by the recesses **52.** In this manner, a hermetic heat seal can still be formed between the foil cover and plastic shell, despite any droplets or moisture that may be present between the cover and shell along the seal area.

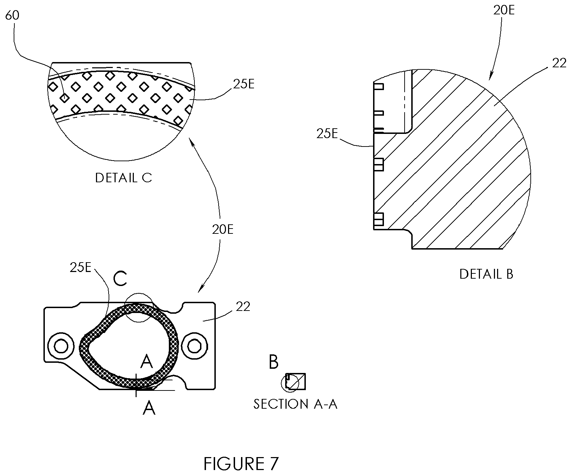

Another embodiment of a seal plate **20E** is shown in **Figure 7****.** This seal plate **20E** contains a plurality of recesses **60** bored into the face **25E** of the plate. In various embodiments, the recesses **60** can be cube-shaped, as depicted, or can be triangular, rectangular, circular, or otherwise. The recesses **60** trap and collect any droplets or moisture present between the foil cover and plastic shell when the seal plate **20E** is pressed against the same.

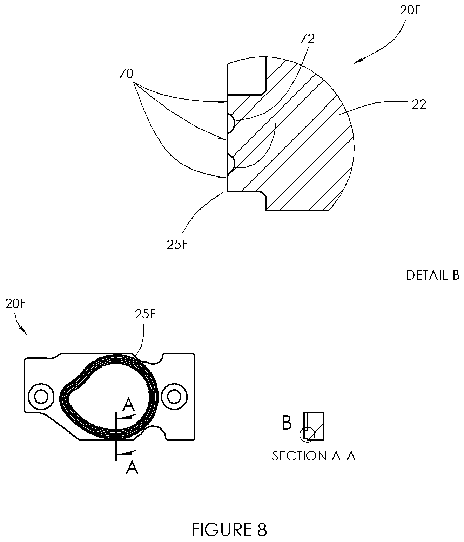

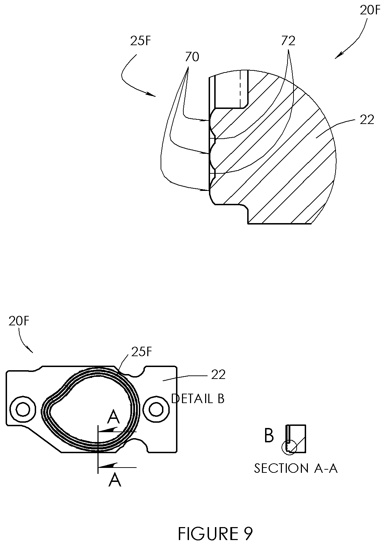

**Figures 8** **and** **9** depict a seal plate **20F** according to still other example embodiments. The seal plate **20F** comprises a plurality of seal tracks **70** along the face **25F,** in the form of ridges extending around the periphery of the sealing face. The tracks **70** further define channels recesses **72** therebetween. The number of seal tracks **70** can vary, although in example embodiments, the number of seal tracks **70** per plate **20F** ranges between two and five tracks. The tracks **70** induce multiple heat seal lines between the foil cover and plastic shell, and displace any droplets or moisture that may exist between the two into the recesses or channels, between the cover and shell that correspond to the recesses **72.** The tracks **70** can comprise flat profiles (as seen in **Figure 8**) or rounded profiles (**Figure 9**). In other embodiments, the tracks are pointed, toothed, or otherwise shaped.

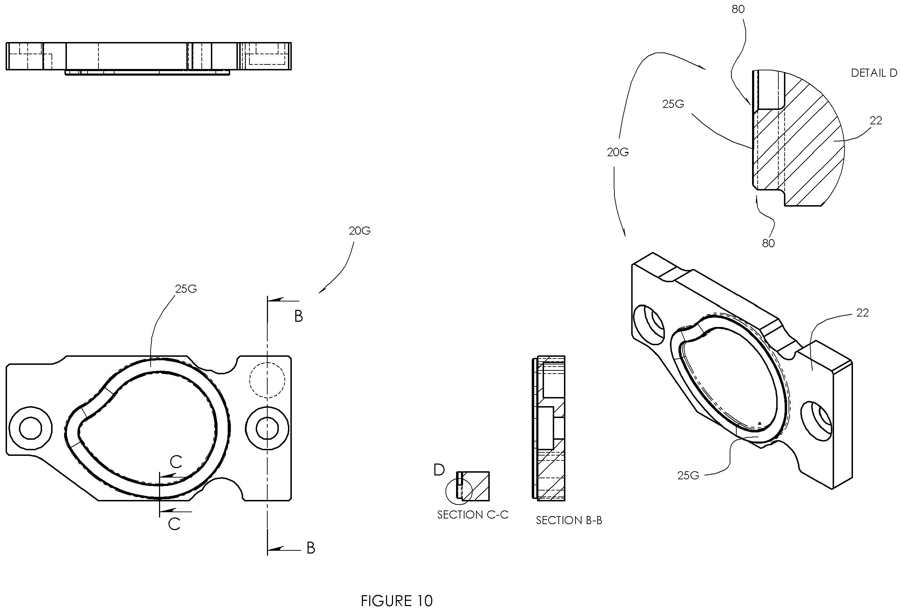

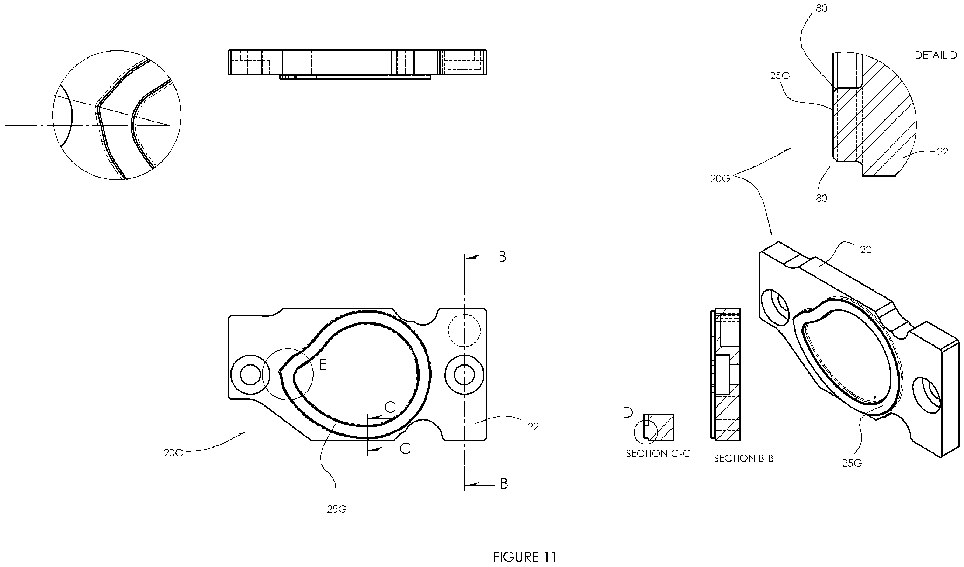

In further embodiments, the seal plate **20G** comprises a face **25G** having one or more chamfered edges **80,** as shown in **Figures 10** **and** **11****.** The chamfered edges **80** displace droplets or moisture from the seal between the foil cover and the plastic shell during the packaging process.

While the invention has been described with reference to preferred and example embodiments, it will be understood by those skilled in the art that a variety of modifications, additions and deletions are within the scope of the invention, as defined by the following claims.

## Claims

1. A seal plate (20D, 20E) for use in sealing ophthalmic lens blister packages having a laminate foil cover and plastic shell defining a bowl for containing an ophthalmic lens and lens solution therein, the seal plate comprising:
a heated plate body (22); and
a sealing face (25D, 25E) protruding from the plate body (22), wherein the sealing face (25D, 25E) has an irregular shape,
wherein the irregular shape includes a plurality of recesses (52,60) in the sealing face (25D, 25E); and
wherein the plurality of recesses (52,60) are arranged over the entire width of the sealing face (25D,25E)
wherein the sealing face (25D, 25E) engages the laminate foil cover and displaces moisture present between the laminate foil cover and the plastic shell in a sealing area around the bowl to induce a hermetic heat seal therebetween.

2. The seal plate (20D) of claim 1, wherein the irregular shape comprises a cross-hatched grid (25D).

3. The seal plate (20E) of claim 1, wherein the recesses (60) are bored into the sealing face (25E).

## Patentansprüche

1. Versiegelungsplatte (20D, 20E) zur Verwendung bei der Versiegelung von Blisterverpackungen von ophthalmischen Linsen, wobei die Blisterverpackungen eine Laminatfolienabdeckung und eine Kunststoffschale haben, die ein Näpfchen zur Aufnahme einer ophthalmischen Linse und einer Linsenlösung darin definiert, wobei die Versiegelungsplatte Folgendes umfasst:
einen beheizbaren Plattenkörper (22) und
eine Versiegelungsfläche (25D, 25E), die vom Plattenkörper (22) vorragt,
wobei die Versiegelungsfläche (25D, 25E) eine unregelmäßige Gestalt hat,
wobei die unregelmäßige Gestalt eine Vielzahl von Aussparungen (52, 60) in der Versiegelungsfläche (25D, 25E) aufweist und
wobei die Vielzahl von Aussparungen (52, 60) über die gesamte Breite der Versiegelungsfläche (25D, 25E) angeordnet sind,
wobei die Versiegelungsfläche (25D, 25E) an der Laminatfolienabdeckung angreift und zwischen der Laminatfolienabdeckung und der Kunststoffschale in einem Versiegelungsbereich um das Näpfchen herum befindliche Feuchtigkeit verdrängt, um dazwischen eine hermetische Heißsiegelung zu erzeugen.

2. Versiegelungsplatte (20D) nach Anspruch 1, wobei die unregelmäßige Gestalt ein kreuzgeripptes Gitter (25D) umfasst.

3. Versiegelungsplatte (20E) nach Anspruch 1, wobei die Aussparungen (60) in die Versiegelungsfläche (25E) gebohrt sind.

## Revendications

1. Plaque de scellage (20D, 20E) destinée à une utilisation dans le scellage d'emballages-coques pour lentilles ophtalmiques comportant un opercule sous forme de feuille stratifiée et une coquille en plastique définissant une cavité destinée à contenir une lentille ophtalmique et de la solution pour lentille, la plaque de scellage comprenant :
un corps de plaque chauffable (22) ; et
une face de scellage (25D, 25E) faisant saillie à partir du corps de plaque (22), la face de scellage (25D, 25E) présentant une forme irrégulière,
la forme irrégulière comprenant une pluralité d'évidements (52, 60) dans la face de scellage (25D, 25E) ; et
la pluralité d'évidements (52, 60) étant disposés sur la totalité de la largeur de la face de scellage (25D, 25E) ;
la face de scellage (25D, 25E) s'appliquant sur l'opercule sous forme de feuille stratifiée et déplaçant l'humidité présente entre l'opercule sous forme de feuille stratifiée et la coquille en plastique dans une région de scellage autour de la cavité de façon à générer un joint de thermoscellage hermétique entre eux.

2. Plaque de scellage (20D) selon la revendication 1, dans laquelle la forme irrégulière comprend une grille à nervures croisées (25D).

3. Plaque de scellage (20E) selon la revendication 1, dans laquelle les évidements (60) sont creusés dans la face de scellage (25E).
